Europäisches Patentamt

European Patent Office

Office européen des brevets

(19)

(11) Veröffentlichungsnummer: **0 203 949**
**B1**

(12) # EUROPÄISCHE PATENTSCHRIFT

(45) Veröffentlichungstag der Patentschrift:
**18.01.89**

(21) Anmeldenummer: **85905815.8**

(22) Anmeldetag: **19.11.85**

(86) Internationale Anmeldenummer:
**PCT/EP 85/00628**

(87) Internationale Veröffentlichungsnummer:
**WO 86/03179 (05.06.86** Gazette **86/12)**

(51) Int. Cl.⁴: **B 65 G 1/04**, B 23 Q 7/14

(54) **VERFAHREN UND VORRICHTUNG ZUM ANDOCKEN EINES EINE AUFLAGEEBENE BILDENDEN TRÄGERELEMENTES AN EINE ORTSFESTE AUFLAGEEBENE.**

(30) Priorität: **28.11.84 DE 3443409**
**23.01.85 DE 3502158**
**13.02.85 DE 3504929**

(43) Veröffentlichungstag der Anmeldung:
**10.12.86 Patentblatt 86/50**

(45) Bekanntmachung des Hinweises auf die Patenterteilung:
**18.01.89 Patentblatt 89/3**

(84) Benannte Vertragsstaaten:
**AT BE CH DE FR GB IT LI LU NL SE**

(56) Entgegenhaltungen:
**DE-A- 3 316 050**
**US-A- 3 998 316**

(73) Patentinhaber: **FRIEDRICH KESSLER + CO.,**
**Seeholzenstrasse 2, D-8032 Gräfelfing (DE)**

(72) Erfinder: **WASNER, Herbert, Am Hedernfeld 7,**
**D-8000 München 70 (DE)**

(74) Vertreter: **Ernicke, Hans-Dieter, Dipl.-Ing. et al,**
**Schwibbogenplatz 2b, D-8900 Augsburg (DE)**

**Beschreibung**

Die Erfindung betrifft ein Verfahren und eine Vorrichtung mit den Merkmalen im Oberbegriff des Verfahrens- und Vorrichtungshauptanspruches.

Aus der DE-OS 33 16 050 ist ein derartiger Palettenwechsler bekannt. Er besteht aus einem Förderwagen mit einer Hubeinrichtung, auf der ein Trägerelement in Form eines Palettenträgers schwimmend gelagert ist. Der Palettenträger weist Zentrierkegel auf, die zum Andocken in ringförmige Zentrieraufnahmen am ortsfesten Gestell der Station greifen. Zum Andocken fährt der Förderwagen mit angehobenem Palettenträger in eine vorpositionierte Stellung gegenüber der ortsfesten Station, wobei die Zentrierkegel und die ringförmigen Zentrieraufnahmen in etwa übereinander zu liegen kommen. Dann wird über die Hubeinrichtung der Palettenträger abgesenkt, wodurch die beiden Zentriermittel in Eingriff geraten. Der Zentrierkegel bewirkt hierbei eine Ausrichtung in der Horizontalebene, während in der Vertikalen die Senkbewegung durch ein Aufsitzen des Palettenträgers mit einer Auflagefläche auf einer ortsfesten Stützfläche und einem Kontaktschalter erfolgt. Damit soll ein Fluchten der beiden Auflageebenen an der Station und auf dem Palettenträger für eine ordnungsgemässe Übergabe der Palette gewährleistet sein.

Dies funktioniert jedoch nur dann, wenn der Werkstattboden unter dem Transportwagen völlig eben und auch parallel zur ortsfesten Auflagefläche an der Station ist. Sobald der Transportwagen nur etwas schief steht, was bei verschmutzten Werkstattböden regelmässig der Fall ist, kommt es zu Winkelfehlern zwischen den beiden Auflageebenen, die das vorbekannte Andocksystem nicht korrigieren kann. In den meisten Fällen werden also die beiden Auflageflächen trotz der Zentrierelemente nicht fluchten.

Aus der US-PS 3 998 316 ist es bekannt, Paletten mittels eines Überhebevorganges an eine Bearbeitungsstation zu übergeben. Hierbei wird die Palette auf einer Trägerform zugeführt, die entlang einer stationären Rollenbahn von Station zu Station bewegt wird. Die Übernahme erfolgt durch eine bewegliche, der Bearbeitungsstation zugeordnete Aufnahmeplatte, die durch eine entsprechende Aussparung in der Trägerplattform hindurchtritt und dabei die Palette abhebt und aufnimmt. Die Lagesicherung der Palette erfolgt jeweils durch Zentrierkegel, die in entsprechende Ringaufnahmen greifen.

Ausgehend von der DE-OS 33 16 050 liegt der Erfindung die Aufgabe zugrunde, eine bessere und betriebssichere Möglichkeit zur exakten Positionierung und Ausrichtung der Auflageebene des Trägerelementes gegenüber der Auflageebene der ortsfesten Bearbeitungsstation zu schaffen.

Die Erfindung löst diese Aufgabe mit den Merkmalen im Kennzeichenteil des Verfahrens- und Vorrichtungshauptanspruches.

Die erfindungsgemässe Lösung gestattet den Ausgleich aller Bodenunebenheiten und sonstigen Schräglagen des Transportmittels. Das Trägerelement wird auf den Auflagepunkten zunächst nach zwei Achsen vorjustiert und in eine definierte Schräglage gebracht, aus der mit der anschliessenden Schwenkbewegung die Auflageebenen sicher und exakt fluchtend zueinander ausgerichtet werden.

In den Unteransprüchen sind vorteilhafte Ausgestaltungen der Zentrierelemente, der Hubelemente und der Schalteinrichtung in mehreren Variationen dargestellt. Sie ermöglichen ein beidseitiges Andocken, schaffen eine geringe Verschmutzungsempfindlichkeit und bieten eine hohe Schaltgenauigkeit beim Justieren und Abstoppen der Schwenkbewegung. Diese Elemente wirken auch vorteilhaft mit seitlichen Lageransätzen zusammen, die beim Transport und teilweise auch beim Andocken das Trägerelement auf dem Transportmittel sichern.

Die Erfindung ist in der Zeichnung beispielsweise und schematisch dargestellt. Es zeigen:

Fig. 1-3 einen erfindungsgemässen Wagen mit einem als Platte ausgebildeten Trägerelement in Seitenansicht, Draufsicht und Vorderansicht,

Fig. 4-6 die verschiedenen Phasen des Andockens bzw. des Positioniervorganges des Trägerelements und seiner Auflageebene an einem Gestell,

Fig. 7-10 die Lage des Wagens mit dem Trägerelement und des Gestells relativ zueinander bei der Palettenübergabe,

Fig. 11 und 12 das Unterfahren einer Palette durch den Wagen zum Zwecke des Abhebens derselben,

Fig. 13-15 eine Variante zu der Ausführungsform gemäss Fig. 4-6 mit einer besonderen Steuereinrichtung,

Fig. 16-18 eine weitere Variante zur Ausführungsform gemäss Fig. 4-6 mit einer vereinfachten Steuereinrichtung,

Fig. 19-21 eine Variante zur Ausführungsform gemäss Fig. 4-6 mit einem Flüssigkeitsschalter,

Fig. 22-24 Seitenansicht, Draufsicht und Vorderansicht eines Wagens mit einem auch zum Transport von Holzpaletten ausgebildeten Trägerelement und

Fig. 25-30 verschiedene Ausführungsformen von Zentrierelementen.

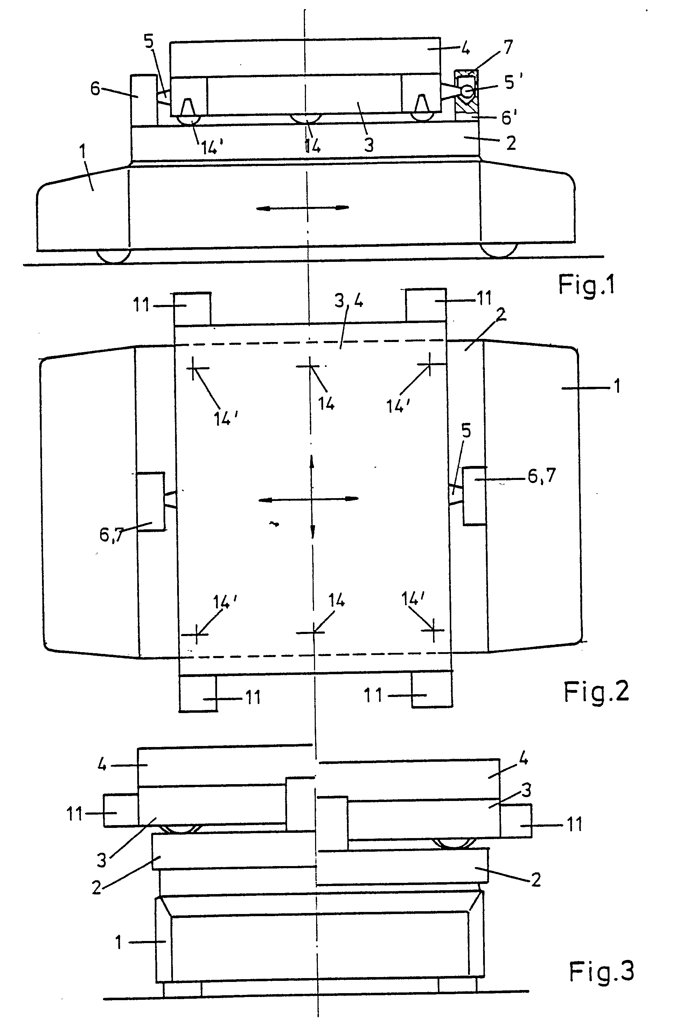

Gemäss Fig. 1-3 ist auf einem Wagen 1 eine Hubeinrichtung 2 mit einer ausgedehnten Deckplatte vorgesehen, auf der ein als eine Palette ausgebildetes Trägerelement 3 aufliegt. Auf diesem wiederum ist eine Palette 4 bekannter Ausführungsform gelagert. Das Trägerelement 3 ist auf der Hubeinrichtung 2 mittels seitlich vorkragender Lageransätze 5, die an ihrem Ende eine kugelförmige Oberfläche 5' aufweisen in kreiskegelförmigen Ausnehmungen 6' von auf der Hubeinrichtung 2 vorgesehenen Lageransätzen 6 in seiner Lage während des Transportes fixiert. Die Vorderansicht des Wagens 1 gemäss Fig. 3 zeigt die Palette 4 im angehobenen (linke Hälfte) und im abgesenkten Zustand (rechte Hälfte).

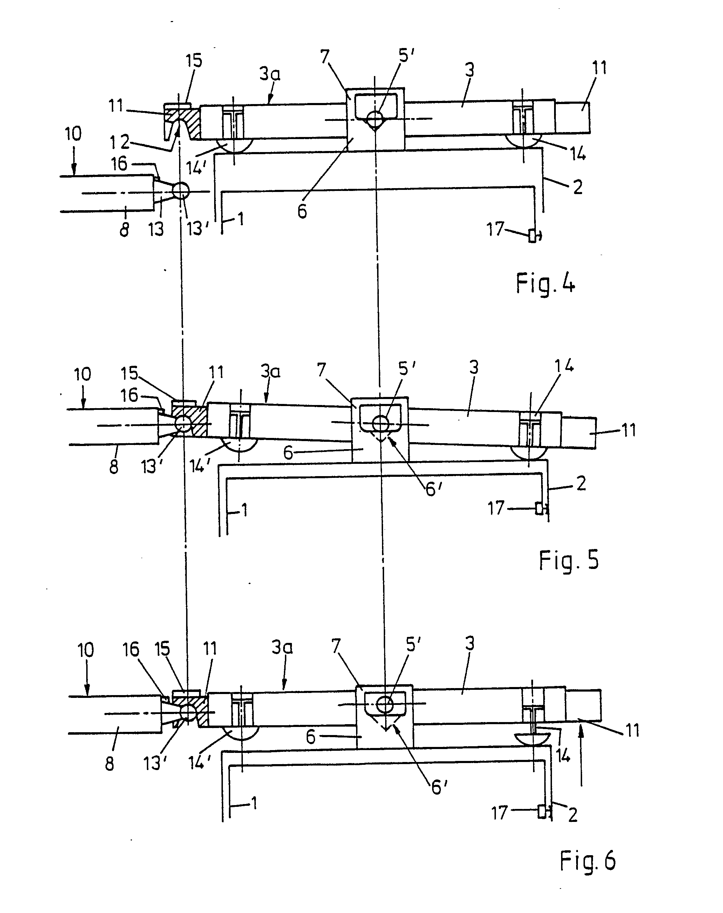

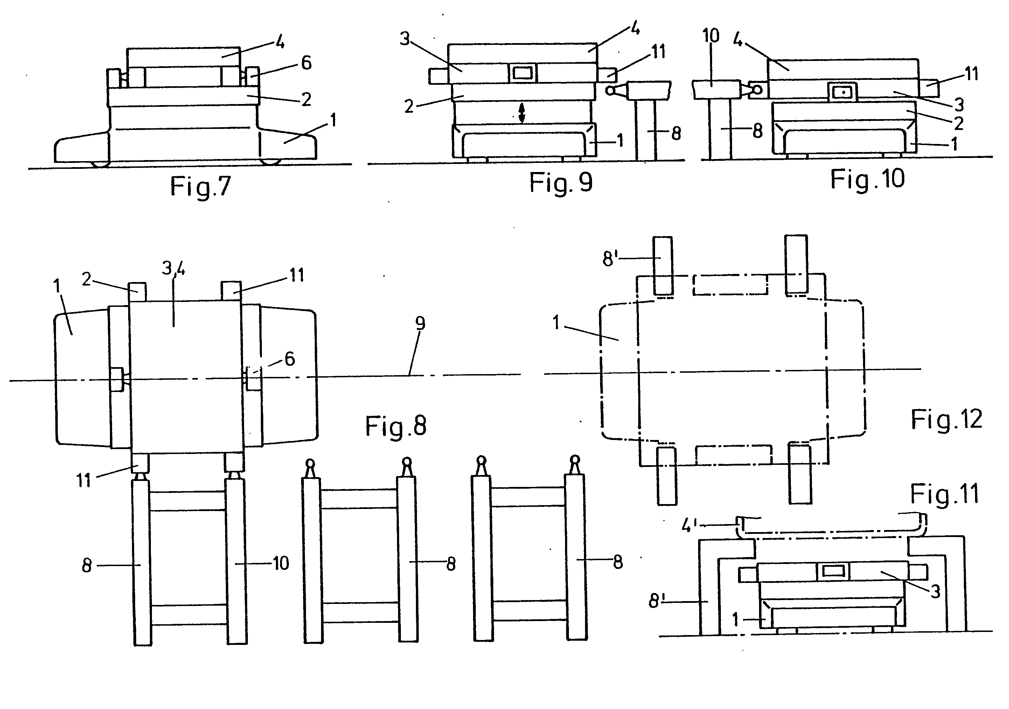

Der Wagen 1 läuft gemäss Fig. 7 und 8 an mehreren Lager- oder Montage- oder Bearbeitungsstationen, von denen in Fig. 8 lediglich die Gestelle 8 für die Palettenauflage dargestellt sind, auf einer nicht näher dargestellten, schienengebundenen oder induktiven Führung in Richtung der Linie 9 entlang. Zur Palettenübergabe auf die Auflageebene 10 eines Gestelles 8 fährt der Wagen 1 mit durch die Hubeinrichtung 2 angehobenem Trägerelement 3 und Palette 4 an dieses betreffende Gestell 8 (Fig. 4, 8 und 9). Hierbei liegen die an dem dem Gestell 8 zugewandten Rand des Trägerelementes 3 vorgesehenen Zentrieransätze 11 mit ihrem kalottenförmigen, nach unten gerichteten Ausnehmungen 12 auf dem Gestell 8 entsprechend angeordneten, kugelförmigen Oberflächen 13' der Zentrieransätze 13 (Fig. 4) auf. Die Mittelpunkte der kugelförmigen Oberflächen 13' liegen auf einer zur Auflageebene 10 parallelen Geraden. Der Öffnungswinkel der kreiskegel- oder kalottenförmigen Ausnehmung kann in weiten Grenzen schwanken. Als vorteilhaft erweist sich ein Winkel von 45°. Durch Absenken der Hubeinrichtung 2 greifen die Zentrieransätze 11 mit ihren Ausnehmungen 12 über diese kugelförmigen Oberflächen 13' der Zentrieransätze 13, so dass sich das Trägerelement 3 daran ausrichtet und infolge der Absenkung eine Schräglage einnimmt (Fig. 5). Dabei werden die kugelförmigen Oberflächen 5' der Lageransätze 5 an dem Trägerelement 3 zwangsläufig aus ihrer kreiskegelförmigen Lagerung 6' am Zentrieransatz 6 frei, so dass eine durch das Eigengewicht des Trägerelementes bewirkte Zwangszentrierung an den Zentrieransätzen 13 in der Höhe und in Längs- und Querrichtung erfolgt. Durch Einschalten eines Hubelementes 14 an der Unterseite des Trägerelementes 3 an dem dem Gestell 8 gegenüberliegenden Rand des Trägerelementes wird dieses soweit angehoben, dass seine Auflageebene 3a sich schliesslich in der gleichen Ebene befindet, wie die Auflageebene 10 des ortsfesten Gestells 8.

Das Einschalten des Hubelementes 14 erfolgt hier durch einen an dem Wagen vorgesehenen Schalter 17, der durch die sich absenkende Hubeinrichtung 2 betätigbar ist. Die Endlagensteuerung des Trägerelementes 3 und damit seiner Auflageebene 3a erfolgt mittels eines an einem oder beiden Zentrieransätzen 11 in einem bestimmten Abstand über den kugelförmigen Oberflächen 13' der Zentrieransätze 13 vorgesehenen Schalter 15, der durch einen ortsfesten Stift 16, der in der gleichen Höhe wie der Schalter 15 an einem Gestell angeordnet ist, betätigt wird. Nachdem so das Trägerelement 3 mit seiner Auflageebene 3a in der mit der Auflagefläche 10 auf dem Gestell 8 gemeinsamen Ebene, auf drei Punkten abgestützt, fixiert ist, kann die Übergabe der Palette 4 stattfinden. Die hierzu erforderlichen Antriebs- bzw. Förder- und Führungsmittel für die Palette sind bekannt und deshalb hier nicht näher dargestellt.

Anschliessend wird das Trägerelement 3 durch die Hubeinrichtung 2 wieder angehoben und weggefahren. Um das Trägerelement 3 und seine Auflageebene 3a dann auch in waagerechter Lage zu halten, sind an seinen Ecken weitere, an seiner Unterseite wirksame Hubelemente 14' vorgesehen. Bei den dargestellten Beispielen sind die Zentrieransätze 11 an beiden gegenüberliegenden Seiten des Trägerelementes 3 vorgesehen, so dass entsprechende Stationen an beiden Seiten des Wagens angefahren werden können.

Wie aus Fig. 11 und 12 ersichtlich, kann der Wagen 1 mit dem erfindungsgemäss ausgebildeten Trägerelement 3 auch zum Unterfahren und Anheben einer in einem weiteren Gestell 8' lagernden Palette 4' oder dergleichen verwendet werden.

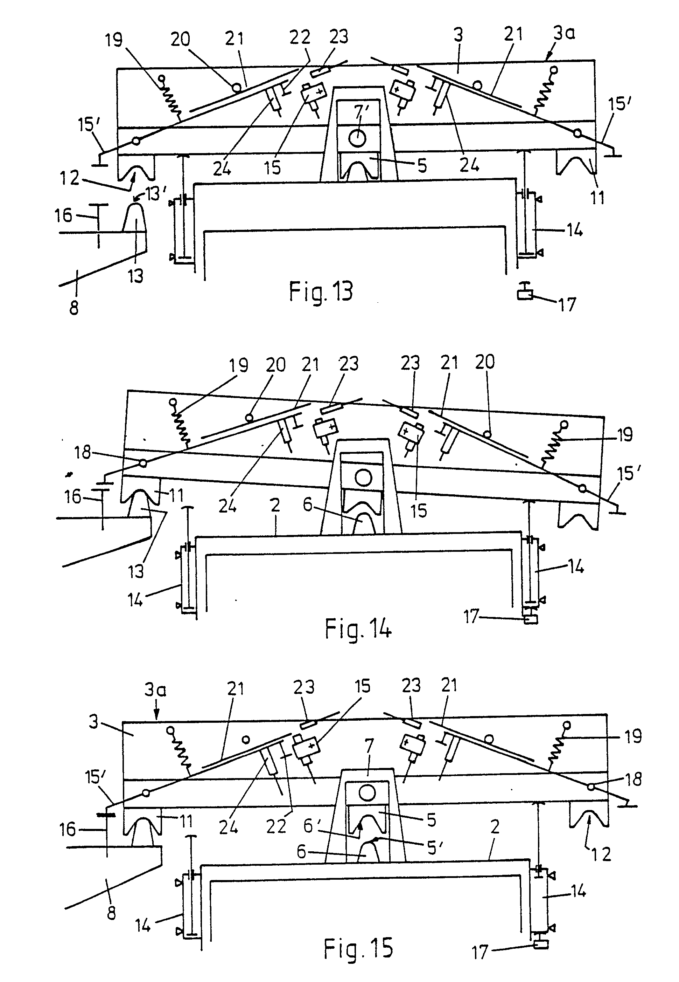

Die Ausführungsform gemäss Fig. 13 bis 15 ist etwas abweichend von der Ausführungsform gemäss Fig. 4 bis 6 ausgeführt. Um diese Gemeinsamkeit mit dieser leichter zu erkennen, sind die einander entsprechenden Teile mit gleichen Bezugszahlen versehen. In Abänderung gegenüber der vorherigen Ausführungsform ist hier die kugelförmige Oberfläche 5' an dem als Bolzen ausgebildeten Lageransatz 6 auf der Hubeinrichtung 2 vorgesehen, während sich die kegelförmige Ausnehmung 6' am Lageransatz 5 des Trägerelementes 3 befindet. Ein an der Hubeinrichtung 2 vorgesehener Bügel 7 verhindert durch Zusammenwirkung mit einem Sperrbolzen 7' am Trägerelement 3 dessen Entfernung von der Hubeinrichtung, während dies bei der vorhergehenden Ausführungsform bereits durch den Lageransatz 5 erreicht wird. Ebenfalls sind hier an dem Gestell 8, von dem nur der untere Teil ohne die Auflageebene dargestellt ist, die Zentrieransätze 13 als vertikale Bolzen ausgebildet, die an ihrem oberen Ende die kugelförmige Oberfläche 13' aufweisen. Auch hier besitzt das Trägerelement 3 auf den beiden Seiten Zentrieransätze 11. Ausserdem sind hier noch an beiden Seiten Hubelemente 14 dargestellt.

Diese ebenfalls als pneumatische oder hydraulische Hubmotoren ausgebildeten Hubelemente 14 sind bei diesem Ausführungsbeispiel mit ihren Zylindern an beiden Seiten der Hubeinrichtung 2 fest angeordnet, während ihre Kolben bzw. ihre Kolbenstangen an dem Trägerelement 3 angreifen bzw. dieses anheben. Beim Anfahren an das Gestell ruht das Trägerelement 3 zunächst auf den Hubelementen (Fig. 13). Bei der Ankunft an dem Gestell 8 wird mit der Hubeinrichtung 2 das Trägerelement 3 abgesenkt. Während es sich an den Ansätzen 13 abstützt, nimmt es die Schräglage ein (Fig. 14). Durch das Absenken der Hubeinrichtung 2 wird schliesslich durch das eine Hubelement 14 der Schalter 17 betätigt, wodurch dieses Hubelement eingeschaltet wird und das Trägerelement 3 anhebt. Der Schalter 17 ist bei diesem Ausführungsbeispiel ortsfest auf der dem Gestell 8 gegenüberliegenden Seite der Hubeinrichtung 2 unterhalb des entsprechenden Hubelementes 14 angeordnet.

Mit dem Einschalten des Hubelementes 14 durch den Schalter 17 wird gleichzeitig ein Schalter 15 einer hier auf beiden Seiten des Trägerelementes vorgesehenen Steuereinrichtung aktiviert. Ein Schalthebel 15' ist um eine Achse 18 oberhalb des Zentrieransatzes 11 schwenkbar gelagert. Er wird durch eine Feder 19, wenn keine weitere Kraft auf ihn einwirkt, gegen einen Anschlag 20 angedrückt. Er weist eine Kontaktfeder 21 auf, die mittels einer Stellschraube 22 in eine gewünschte Lage relativ zum Hebel eingestellt werden kann. Durch das Einschalten des Hubelementes 14 (Fig. 14) wird das Trägerelement 3 angehoben. Das der Kontaktfeder 21 abgewandte Ende des Schalthebels 15 trifft auf den Kontaktstift 16 am Gestell 8. Hierdurch wird beim weiteren Anheben des Trägerelementes 3 durch das Hubelement 14 der Schalthebel 15' dem Schalter 15 entgegengeschwenkt. Die Kontaktfeder 21 ist mittels der Stellschraube 22 so justiert, dass durch sie der Schalter 15 in dem Augenblick betätigt wird, wenn die Auflageebene 3a des Trägerelementes 3 ihre Sollage erreicht hat, sich also genau deckungsgleich mit der hier nicht näher dargestellten Auflageebene 10 des Gestells 8 in der gemeinsamen Ebene befindet (Fig.

15). Der Schalter 15 ist hier zweckmässigerweise als ein sogenannter berührungsloser Schalter ausgebildet. Mit 23 ist ein nicht unbedingt erforderlicher Hilfsschalter bezeichnet, der hier einen Schleichgang des hydraulischen Antriebs des Hubelementes 14 einschaltet, um ein Überschwingen infolge einer zu geringen Abbremsung der Kolbenbewegung zu vermeiden. Ausserdem ist noch ein Notschalter 24 vorgesehen, der bei Versagen des Schalters 15 das Hubelement 14 abschaltet.

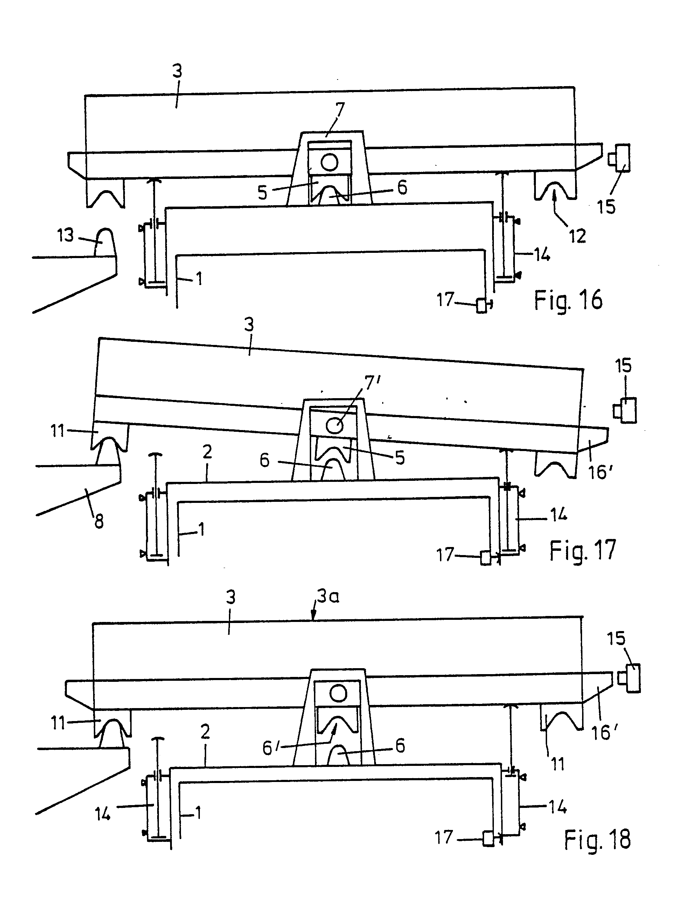

Bei der Ausführungsform gemäss Fig. 16 bis 18 handelt es sich um die gleichen Positioniervorgänge. Hier erfolgt die Steuerung lediglich mit einem ortsfest jeweils auf der gegenüberliegenden Seite des Gestells angeordneten Schalter 15, der ebenfalls zunächst beim Absenken des Trägerelementes (Fig. 16) inaktiv ist und erst durch Betätigen des Schalters 17, wenn auch das Hubelement 14 eingeschaltet ist, aktiviert wird. Ist, wie bei diesem Ausführungsbeispiel, der Schalter 17 unmittelbar am Wagen 1 angebracht, so muss natürlich durch eine entsprechende Steuerung dafür gesorgt werden, dass jeweils das richtige, jeweils auf der gegenüberliegenden Seite des Gestells 8 befindliche Hubelement 14 eingeschaltet wird.

Das Trägerelement 3 hat auf der dem Schalter 15 zugewandten Seite einen seitlich vorspringenden Ansatz 16'. Beim Anheben des Trägerelementes durch das Hubelement 14 (Fig. 17) wird dieser Ansatz an das Kontaktelement des Schalters 15 heranbewegt. Hat das Trägerelement 3 seine Sollage erreicht (Fig. 18), betätigt dieser Ansatz 16' als Kontaktelement den Schalter 15, der dadurch das Hubelement 14 abschaltet.

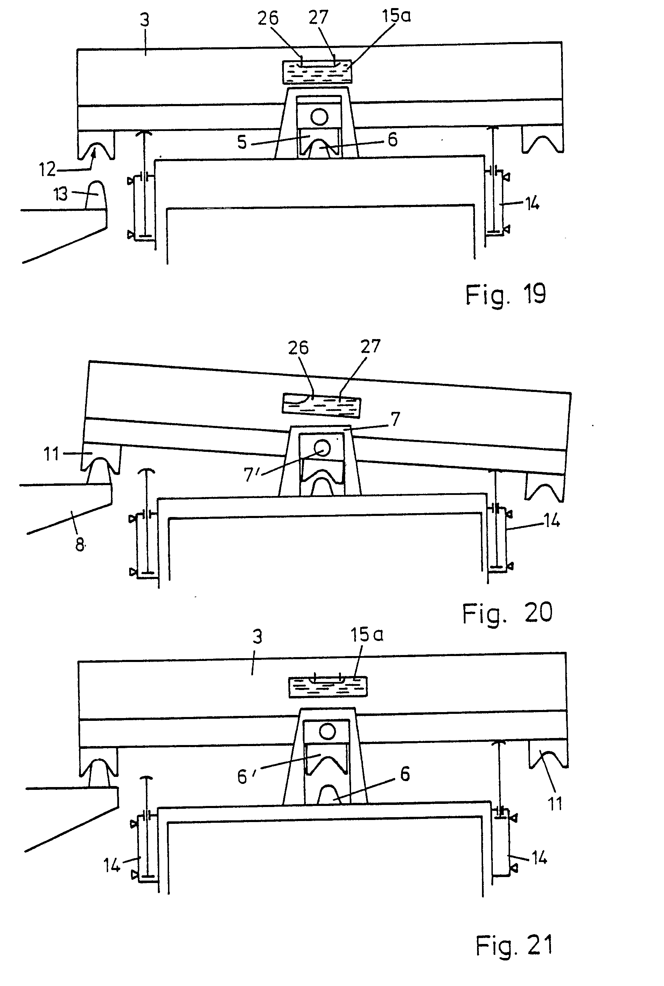

Bei der Ausführungsform gemäss Fig. 19 bis 21 ist mit dem Trägerelement 3 ein Flüssigkeitsschalter 15a verbunden. Zwei Schaltstifte 26, 27 werden beim Absenken des Trägerelementes in unterschiedlicher Weise von der Flüssigkeit benetzt und schalten dadurch das Hubelement 14 ein (Fig. 20), bis wiederum das Trägerelement 3 seine Sollage (Fig. 21) erreicht hat.

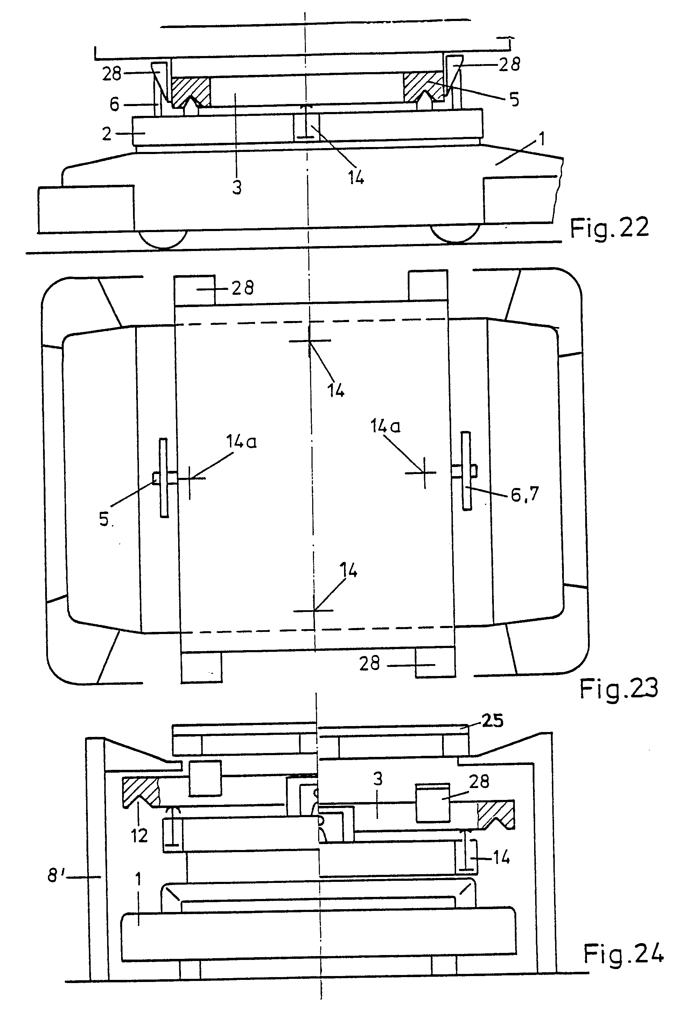

Bei dem Ausführungsbeispiel des Förderwagens gemäss Fig. 22 bis 24 ist als Besonderheit vorgesehen, dass an den beiden Seiten des Trägerelementes 3 besondere Auflageansätze in Form von Konsolen 28 angeordnet sind. Hierdurch wird erreicht, dass auch an sich bekannte Holzpaletten 25 auf einem Ablagegestell 8' mit dem erfindungsgemässen Wagen 1 unterfahren und angehoben bzw. darauf abgesenkt werden können (Fig. 24). Die Ansätze bzw. Konsolen 28 können mit Zentriermitteln ausgestattet sein. Sie ragen über die Auflageebene 3a des Trägerelementes 3 hinaus nach oben und bilden so eine erhöhte Auflageebene. Hierdurch wird das Unterfahren des Ablagegestelles 8' erleichtert.

Beim Transport liegt das Trägerelement 3 auf den beiden Hubelementen 14, sowie auf in Fig. 23 an den Seiten vorgesehenen Auflageelementen 14a. Diese Auflageelemente 14a sind in den anderen Figuren nicht dargestellt. Sie dienen als Auflage für die Palette während ihres Transportes.

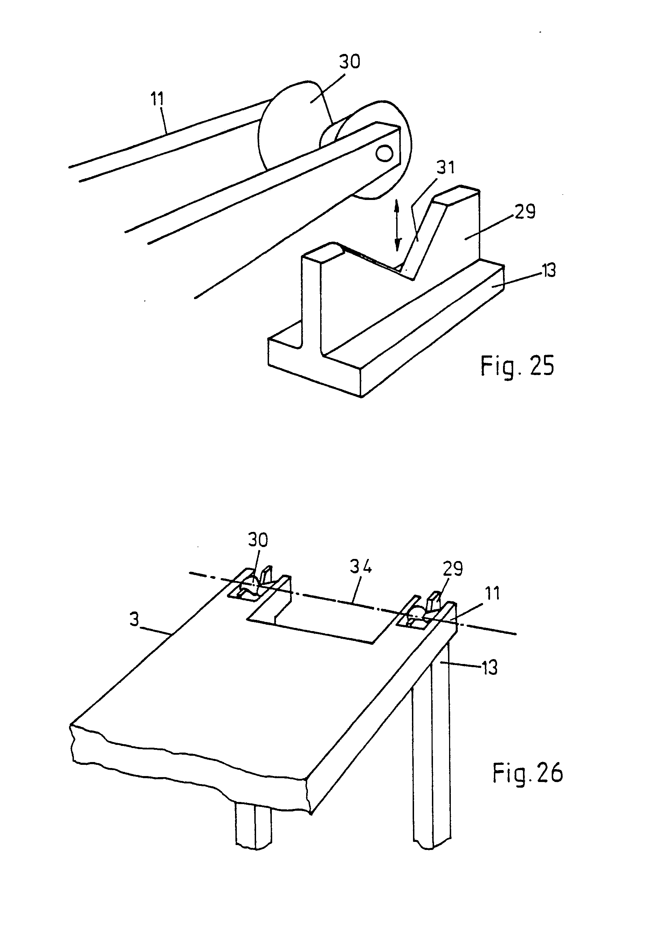

Anstelle der Ausnehmung 12 und der kugeligen Oberfläche 13' zeigen die folgenden Figuren eine Ausbildung der Zentrieransätze 11 und 13 mit wesentlich einfacheren Zentrierelementen. Beim Beispiel der Fig. 25 und 26 ist der einzelne Zentrieransatz 11 mit einer Doppelkegelrolle 30 versehen, während an dem entsprechenden Zentrieransatz 13 des Gestells als Zentrierelement ein Prisma 29 mit einem etwa V-förmigen Ausschnitt 31 zur Aufnahme einer Doppelkegelrolle 19 aufweist. Wie aus Fig. 26 ersichtlich, ermöglichen diese Zentriermittel eine Schwenkung des Trägerelementes 3 um eine durch beide Zentrierelemente der in Eingriff befindlichen Zentrieransätze 11 und 13 hindurchverlaufende, gemeinsame Achse 34.

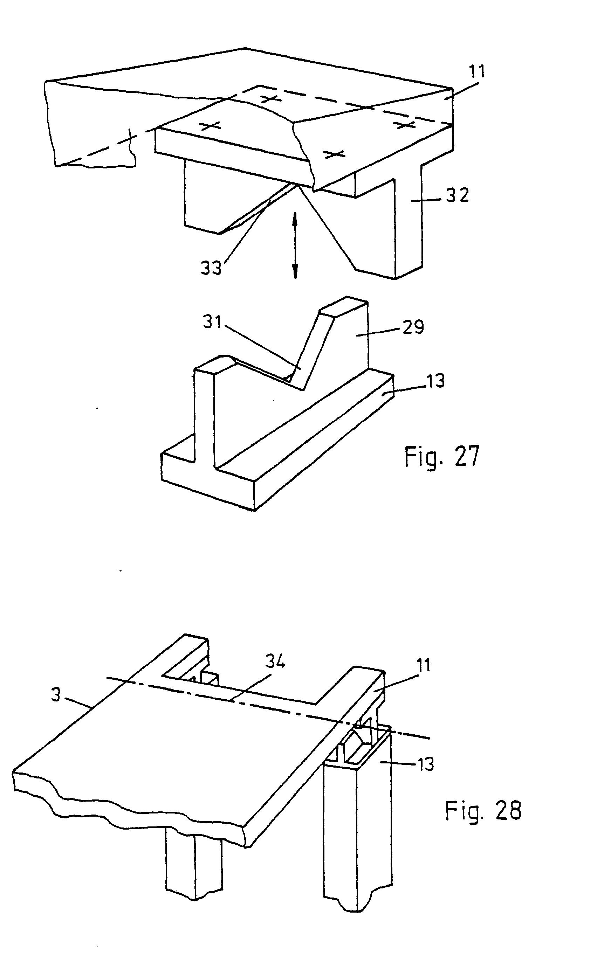

Eine noch einfachere Ausführungsform ergibt sich, wenn der Zentrieransatz 11 anstelle der Doppelkegelrolle ebenfalls ein Prisma 32 mit einem V-förmigen Ausschnitt 33 aufweist, das allerdings mit der durch seinen V-förmigen Ausschnitt 33 definierten Ebene senkrecht zu der entsprechenden Ebene des Prismas 29 am Zentrieransatz 13 orientiert ist (Fig. 27 und 28). Auch diese Zentriermittel ermöglichen eine Schwenkung der in Eingriff befindlichen Zentrieransätze 11 und 13 relativ zueinander um eine gemeinsame, durch die Zentrierelemente hindurchverlaufende Achse 34, und damit eine Schwenkung des Trägerelementes 3 relativ zum Gestell.

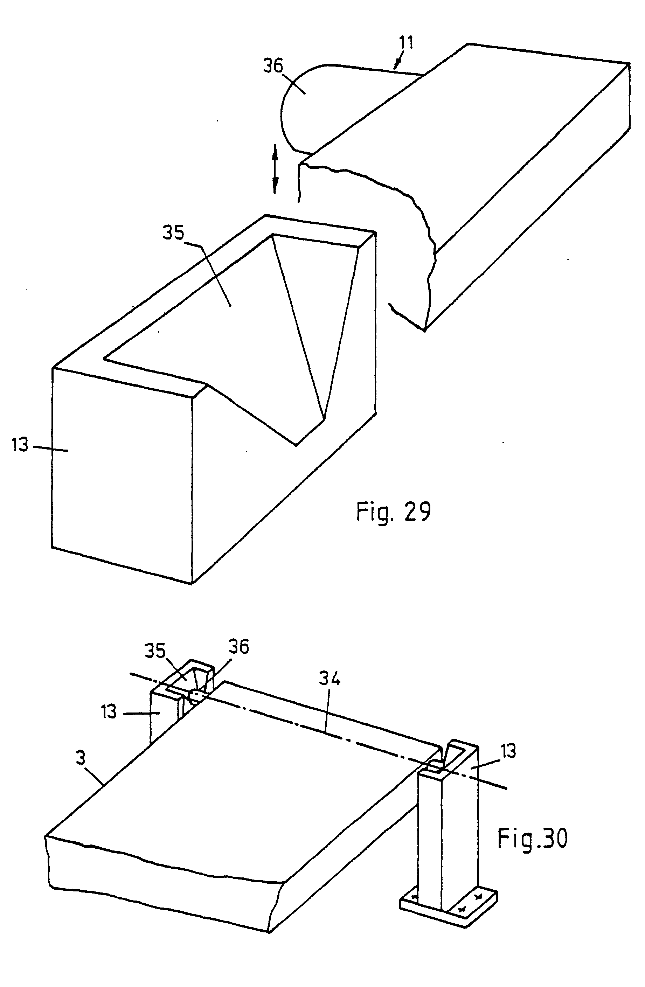

Eine weitere, einfache Ausführungsform ergibt sich aus den Fig. 29 und 30. Hier sind die Zentrieransätze 11 als vorzugsweise zylindrische Zapfen 36 vorgesehen, die beim Absenken des Trägerelementes in je eine an den gestellseitigen Zentrieransätzen 13 vorgesehene Aufnahme 35 eingreifen. Diese Aufnahme ist bei diesem Beispiel durch zwei zu beiden Seiten und an der Stirnseite des Zapfens 36 schräg nach unten geneigte dreieck-bzw. trapezförmige Flächen gebildet, die etwa wie die Innenflächen eines Tetraeders wirken und den Zapfen genau zentrieren, so dass das Trägerelement 3, wie in Fig. 30 dargestellt, um die durch die Zapfen 36 gebildete Achse 34 schwenkbar in den Aufnahmen 35 der ortsfesten Zentrieransätze 13 gelagert ist.

Da auch bei diesen Beispielen die Schwenkachse 34 in der gewünschten Lage parallel zur Auflageebene des hier nicht gezeigten Gestells ausgerichtet ist, wird auch mit diesen wesentlich einfacheren Zentriermitteln die gewünschte, koplanare Lage der beiden Ebenen zueinander erreicht.

**Patentansprüche**

1. Verfahren zum Andocken eines auf einem Förderwagen (1) oder ähnlichem Transportmittel anhebbar gelagerten, eine Auflageebene (3a) bildenden Trägerelementes (3) oder dergleichen relativ zu einer ortsfesten Auflageebene (10), wobei nach dem Anfahren vor die ortsfeste Auflageebene (10) das Trägerelement (3) aus einer angehobenen Position auf eine untere Endposition abgesenkt sowie angehalten wird und an seiner der ortsfesten Auflageebene (10) zugewandten Seite auf zwei ortsfesten Auflagepunkten (13), die auf einer zu der ortsfesten Auflageebene (10) parallelen Geraden liegen, formschlüssig geführt abgestützt wird, dadurch gekennzeichnet, dass das Trägerelement (3) an den Auflagepunkten (13) schwenkbar aufgehängt wird, und dass das Trägerelement (3) aus der Endposition an seinem gegenüberliegenden Rand soweit angehoben wird, dass seine Auflageebene (3a) und die ortsfeste Auflageebene (10) in der gleichen Ebene liegen.

2. Verfahren nach Anspruch 1, dadurch gekennzeichnet, dass das Trägerelement (3) an einem einzigen Punkt seines gegenüberliegenden Randes angehoben wird.

3. Vorrichtung zur Durchführung des Verfahrens nach Anspruch 1 oder 2, bei welcher ein Transportmittel in Form eines schienengebundenen oder induktiv bewegbaren Wagens (1) oder dergleichen zum Fördern oder Übergeben von Gegenständen, insbesondere Paletten (4, 4'), an eine in einem Gestell (8, 8') befindliche Auflageebene (10) vorgesehen ist, wobei der Wagen (1) eine Hubeinrichtung (2) aufweist, auf der ein an seiner Oberseite ebenfalls eine Auflageebene (3a) bildendes Trägerelement (3) gelagert ist, das auf der Hubeinrichtung (2) durch Abheben lösbar in seiner Lage fixiert ist, und wobei an dem Gestell (8) in dem dem Wagen (1) zugewandten Bereich und an dem Trägerelement (3) an der dem Gestell (8) zugewandten Seite jeweils zwei in gleichem Abstand voneinander angeordnete Zentrieransätze (11, 13) vorgesehen sind, die beim Absenken des Trägerelementes (3) ineinandergreifen und Zentrierelemente aufweisen, dadurch gekennzeichnet, dass das Trägerelement (3) auf den Zentrieransätzen (11, 13) um eine zur Auflageebene (10) des Gestells (8) parallel verlaufende Achse (34) schwenkbar abgestützt ist, und dass im Bereich des den Zentrieransätzen (11) gegenüber befindlichen Randes des Trägerelementes (3) ein diesen Rand anhebendes Hubelement (14) vorgesehen ist, das durch eine Steuereinrichtung (15, 15', 15a, 16, 16') beim Absenken des Trägerelementes (3) auf die ortsfesten Zentrieransätze (13) ein- und nach Anheben derselben in die fluchtende Lage abschaltbar ist.

4. Vorrichtung nach Anspruch 3, dadurch gekennzeichnet, dass das eine, der einen Auflageebene (10) zugeordnete Paar von Zentrieransätzen (13) kugelförmige Oberflächen (13') als Zentrierelemente aufweist, deren Kugelmittelpunkte auf einer zu dieser Auflageebene (10) parallel verlaufenden Achse (34) liegen, und das andere Paar von Zentrieransätzen (11) der Form und der Lage der Kugeln entsprechende, kreiskegel- oder kalottenförmige Ausnehmungen (12) aufweist, deren entsprechende Punkte ebenfalls auf einer zu der anderen Auflageebene (3a) parallelen Achse liegen.

5. Vorrichtung nach Anspruch 3 oder 4, dadurch gekennzeichnet, dass das Trägerelement (3) an seinen nicht dem Gestell (8) zugewandten Rändern über je einen Lageransatz (5) auf einem an der Hubeinrichtung (2) vorgesehenen Lageransatz (6) abstützbar ist, wobei der eine Lageransatz (5, 6) die Form einer Kugeloberfläche (5') und der andere eine kreiskegel- oder kalottenförmige Ausnehmung (6') aufweist, die beim Abstützen die Kugeloberfläche (5') formschlüssig umgreift.

6. Vorrichtung nach Anspruch 3, 4 oder 5, dadurch gekennzeichnet, dass die jeweils unteren Lager- oder Zentrieransätze (6, 13) die Kugeloberfläche (5', 13') aufweisen.

7. Vorrichtung nach Anspruch 5, dadurch gekennzeichnet, dass die jeweils unteren Lager- oder Zentrieransätze (6, 13) als vertikale, eine kugelige Oberfläche (5', 13') aufweisende Bolzen ausgebildet sind.

8. Vorrichtung nach einem der Ansprüche 3 bis 7, dadurch gekennzeichnet, dass der Öffnungswinkel der kreiskegel- oder kalottenförmigen Ausnehmung (6', 12) etwa 45° beträgt.

9. Vorrichtung nach Anspruch 3, dadurch gekennzeichnet, dass als Zentrierelemente einerseits je ein Prisma (29) mit einer V-förmig ausgeschnittenen Kante und andererseits je eine Doppelkegelrolle (30), deren Achse quer zur Ebene des V-förmigen Ausschnittes (31) verläuft, vorgesehen sind.

10. Vorrichtung nach Anspruch 3, dadurch gekennzeichnet, dass als Zentrierelemente beiderseits Prismen (29, 32) mit V-förmig ausgeschnittener Kante vorgesehen sind, wobei die Ebene des V-förmigen Ausschnittes (31, 33) auf der einen Seite senkrecht zu der auf der anderen Seite orientiert ist.

11. Vorrichtung nach Anspruch 3, dadurch gekennzeichnet, das als Zentrierelemente einerseits Zapfen (36) und andererseits je eine durch drei etwa nach Art der Innenflächen eines Tetraeders geneigte, dreieck- oder/und trapezförmige Flächen gebildete Aufnahme (35) für die Zapfen (36) vorgesehen sind.

12. Vorrichtung nach Anspruch 3, dadurch gekennzeichnet, dass das den den Zentrieransätzen (11) gegenüberbefindlichen Rand des Trägerelementes (3) anhebende Hubelement (14) als ein pneumatischer oder hydraulischer Hubmotor ausgebildet ist, dessen Zylinder mit dem Trägerelement (3) verbunden ist und dessen Kolben sich auf der Hubeinrichtung (2) abstützt.

13. Vorrichtung nach Anspruch 3, dadurch gekennzeichnet, dass das den den Zentrieransätzen gegenüberbefindlichen Rand des Trägerelementes (3) anhebende Hubelement (14) als ein pneumatischer oder hydraulischer Hubmotor ausgebildet ist, dessen Zylinder mit der Hubeinrichtung (2) verbunden ist und dessen Kolben an dem Trägerelement (3) angreift.

14. Vorrichtung nach Anspruch 3, dadurch gekennzeichnet, dass das Hubelement (3) als ein durch einen Motor betätigbarer Spindeltrieb ausgebildet ist, der sich mit seinem einen Ende an der Hubeinrichtung abstützt und mit seinem anderen Ende an dem Trägerelement (3) angreift.

15. Vorrichtung nach einem der Ansprüche 3 bis 14, dadurch gekennzeichnet, dass an beiden Seiten des Trägerelementes (3) Zentrieransätze (11) und je ein Hubelement (14) vorgesehen sind.

16. Vorrichtung nach Anspruch 3, dadurch gekennzeichnet, dass die Steuereinrichtung mindestens einen Schalter (15, 15a) zum Abschalten des Hubelementes (14) aufweist, der durch das Zusammenwirken eines ortsfesten (16) und eines mit dem Trägerelement (3) verbundenen Kontaktelementes betätigbar ist.

17. Vorrichtung nach Anspruch 16, dadurch gekennzeichnet, dass der Schalter (15) zusammen mit dem einen Kontaktelement an einem Zentrieransatz (11) des Trägerelementes (3) vorgesehen ist und durch einen im Bereich des Zentrieransatzes (11) ortsfest am Gestell (8) angeordneten Kontaktstift (16) betätigbar ist.

18. Vorrichtung nach Anspruch 16 oder 17, dadurch gekennzeichnet, dass der Schalter (15) am Trägerelement (3) über einen im Bereich oberhalb eines Zentrieransatzes (11) des Trägerelementes (3) um eine Achse (18) schwenkbar gelagerten Schalthebel (15') betätigbar ist, der durch den ortsfesten Kontaktstift (16) gegen die Kraft einer Feder (19) an den Schalter (15) hinbewegbar ist.

19. Vorrichtung nach Anspruch 16, dadurch gekennzeichnet, dass der Schalter (15) auf der durch das Hubelement (14) anzunehmenden Seite des Trägerelementes (3) ortsfest angeordnet und durch ein als seitlich vorspringender Ansatz (16') am Trägerelement (3) ausgebildetes Kontaktelement betätigbar ist.

20. Vorrichtung nach Anspruch 3, dadurch gekennzeichnet, dass die Steuereinrichtung einen Flüssigkeitsschalter (15a) aufweist, der nach dem Prinzip einer Wasserwaage arbeitet.

21. Vorrichtung nach einem der Ansprüche 3 bis 20, dadurch gekennzeichnet, dass an den Ecken oder Seiten des Trägerelementes (3) weitere, an seiner Unterseite wirksame, steuerbare Hub- oder Auflageelemente (14', 14a) vorgesehen sind.

22. Vorrichtung nach einem der Ansprüche 3 bis 20, dadurch gekennzeichnet, dass an zwei gegenüberliegenden Seiten des Trägerelementes (3) Auflageansätze (28) vorgesehen sind, die über die Auflageebene (3a) nach oben ragen und eine erhöhte Auflageebene bilden.

## Claims

1. Process for docking a carrier element (3) or the like, forming a supporting plane (3a) and mounted in a raisable manner on a conveyor carriage (1) or similar transporting means, relative to a fixed-location supporting plane (10) in which, after moving in front of the fixed-location supporting plane (10), the carrier element (3) is lowered from a raised position into a lower end position and stopped, and is supported in a positively secured guided manner on its side facing the fixed-locating supporting plane (10) on two fixed-location supporting points (13), which lie on a straight line parallel to the fixed-location supporting plane (10), characterized in that the carrier element (3) is suspended in a pivotal manner at the supporting point (13), and in that the carrier element (3) is raised at its opposite edge out of the end position to such an extent that its supporting plane (3a) and the fixed-location supporting plane (10) lie in the same plane.

2. Process according to Claim 1, characterized in that the carrier element (3) is raised at a single point of its opposite edge.

3. Apparatus for implementation of the process according to Claim 1 or 2, in which a transporting means in the form of a rail-bound or inductively moveable carriage (1) or the like is provided for the conveyance or transfer of articles, in particular pallets (4, 4') to a supporting plane (10) in a frame (8, 8'), the carriage (1) having a lifting device (2), on which there is mounted a carrier element (3) which likewise forms a supporting plane (3a) on its upper side and is fixed in its position on the lifting device (2) releasably by raising, and there being provided on the frame (8), in the region facing the carriage (1), and on the carrier element (3), on the side facing the frame (8) in each case two equally spaced apart centring pieces (11, 13), which engage in one another during the lowering of the carrier element (3) and have centring elements, characterized in that the carrier element (3) is supported on the centring pieces (11, 13) pivotally about an axis (34) running parallel to the supporting plane (10) of the frame (8), and in that there is provided in the region of the edge of the carrier element (3) opposite the centring piece (11) a lifting element (14), which raises this edge, can be switched by a control device (15, 15', 15a, 16, 16') on during lowering of the carrier element (3) onto the fixed-location centring pieces (13) and off after raising of the same into the aligned position.

4. Apparatus according to Claim 3, characterized in that the one pair of centring pieces (13), assigned to the one supporting plane (10), has spherical surfaces (13') as centring elements, the sphere-centre points of which lie on an axis (34) running parallel to this supporting plane (10), and the other pair of centring pieces (11) has circular-conical or spherical recesses (12) corresponding to the shape and the position of the spheres, the corresponding points of which likewise lie on an axis parallel to the other supporting plane (3a).

5. Apparatus according to Claim 3 or 4, characterized in that the carrier element (3) can be supported at its edges not facing the frame (8) by means of one bearing piece (5) each on a bearing piece (6) provided on the lifting device (2), the one bearing piece (5, 6) having the form of a spherical surface (5') and the other having a circular-conical or spherical recess (6'), which positively embraces the spherical surface (5') during support.

6. Apparatus according to Claim 3, 4 or 5, characterized in that the respectively lower bearing or centring pieces (6, 13) have the spherical surface (5', 13').

7. Apparatus according to Claim 5, characterized in that the respectively lower bearing or centring pieces (6, 13) are designed as vertical bolts which have a spherical surface (5', 13').

8. Apparatus according to one of Claims 3 to 7, characterized in that the angle of inclusion of the circular-conical or spherical recess (6', 12) is approximately 45°.

9. Apparatus according to Claim 3, characterized in that, as centring elements, on the one hand one prism (29) each, having an edge cut out in the shape of a V, and on the other hand one double-conical roller (30) each, the axis of which runs transversely to the plane of the V-shaped cut-out (31), are provided.

10. Apparatus according to Claim 3, characterized in that, as centring elements, prisms (29, 32) having an edge cut out in the shape of a V are provided on both sides, the plane of the V-shaped cut-out (31, 33) on the one side being oriented perpendicular to that on the other side.

11. Apparatus according to Claim 3, characterized in that, as centring elements, on the one hand pins (36) and on the other hand one receptacle (35) each for the pins (36) which is formed by three triangular and/or trapezoidal surfaces inclined approximately in the manner of the inner surfaces of a tetrahedron, are provided.

12. Apparatus according to Claim 3, characterized in that the lifting element (14) raising the edge of the carrier element (3) opposite the centring pieces (11) is designed as a pneumatic or hydraulic lifting motor, the cylinder of which is connected to the carrier element (3) and the piston of which is supported on the lifting device (2).

13. Apparatus according to Claim 3, characterized in that the lifting element (14) raising the edge of the carrier element (3) opposite the centring pieces is designed as a pneumatic or hydraulic lifting motor, the cylinder of which is connected to the lifting device (2) and the piston of which acts on the carrier element (3).

14. Apparatus according to Claim 3, characterized in that the lifting element (3) is designed as a worm drive, which can be operated by a motor, is supported by its one end on the lifting device and acts with its other end on the carrier element (3).

15. Apparatus according to one of Claims 3 to 14, characterized in that centring pieces (11) and one lifting element (14) each are provided on both sides of the carrier element (3).

16. Apparatus according to Claim 3, characterized in that the control device has at least one switch (15, 15a) for switching-off of the lifting element (14), which switch can be operated by the interaction of a fixed-location contact element (16) and of a contact element connected to the carrier element (3).

17. Apparatus according to Claim 16, characterized in that the switch (15) is provided together with the one contact element on a centring piece (11) of the carrier element (3) and can be operated by a contact pin (16) arranged in fixed location on the frame (8) in the region of the centring piece (11).

18. Apparatus according to Claim 16 or 17, characterized in that the switch (15) on the carrier element (3) can be operated by means of a switch lever (15'), which is mounted pivotally about an axis (18) in the region above a centring piece (11) of the carrier element (3) and can be moved by the fixed-location contact pin (16) against the force of a spring (19) towards the switch (15).

19. Apparatus according to Claim 16, characterized in that the switch (15) is arranged in fixed location on the side of the carrier element (3) to be raised by the lifting element (14) and can be operated by a contact element designed as a laterally projecting piece (16') on the carrier element (3).

20. Apparatus according to Claim 3, characterized in that the control device has a liquid-level switch (15a), which operates on the principle of a spirit level.

21. Apparatus according to one of Claims 3 to 20, characterized in that further, controllable lifting or supporting elements (14, 14a) are provided at the corners or sides of the carrier element (3), acting on its underside.

22. Apparatus according to one of Claims 3 to 20, characterized in that supporting pieces (28) are provided on two opposite sides of the carrier element (3), project upwards beyond the supporting plane (3a) and form an elevated supporting plane.

## Revendications

1. Procédé pour accoupler un élément de support (3) ou analogue, monté, de manière à pouvoir être soulevé sur un chariot de transport (1) ou sur un moyen de transport semblable et formant une surface portante (3a), à une surface portante fixe (10), et selon lequel, après le rapprochement en direction de la surface portante fixe (10), l'élément de support (3) est abaissé depuis une position soulevée jusque dans une position d'extrémité inférieure et y est maintenu et est soutenu en étant guidé selon une liaison par formes complémentaires, au niveau de sa face tournée vers la surface portante fixe (10), sur deux points d'appui fixes (13), qui sont situés sur une droite parallèle à la surface portante fixe (10), caractérisé par le fait que l'élément de support (3) est suspendu de manière à pouvoir pivoter au niveau des points d'appui (13) et que l'élément de support (3) est soulevé à partir de la position d'extrémité, au niveau de son bord opposé, au point, que sa surface portante (3a) et la surface portante fixe (10) sont situées dans le même plan.

2. Procédé suivant la revendication 1, caractérisé par le fait que l'élément de support (3) est soulevé au niveau d'un point unique de son bord opposé.

3. Dispositif pour la mise en oeuvre du procédé suivant la revendication 1 ou 2, dans lequel il est prévu un moyen de transport se présentant sous la forme d'un chariot (1) ou analogue circulant sur des rails ou déplaçable inductivement et servant au transport ou à la délivrance d'objets, notamment des palettes (4, 4'), sur une surface portante (10) située dans un châssis de support (8, 8'), et dans lequel le chariot (1) possède un dispositif de levage (2) sur lequel est monté un élément de support (3) formant également une surface portante (3a) au niveau de sa face supérieure et est fixé de façon amovible en position sur le dispositif de levage (2), et dans lequel il est prévu, sur le châssis de support (8), dans la zone tournée vers le chariot (1) et sur l'élément de support (8) dans la zone tournée vers le chariot (1) et sur l'élément de support (3) sur la face tournée vers le châssis de support (8), respectivement deux organes saillants de centrage (11, 13) séparés par une même distance, qui s'emboîtent l'un dans l'autre lors de l'abaissement de l'élément de support (3) et possèdent des organes de centrage, caractérisé par le fait que l'élément de support (3) prend appui sur les organes saillants de centrage (11, 13) de manière à pouvoir pivoter autour d'un axe (34) parallèle à la surface portante (10) du châssis de support (8), et que dans la zone du bord de l'élément de support (3), situé à l'opposé des organes saillants de centrage (11), il est prévu un organe de levage (14), qui soulève ce bord et qui, au moyen d'un dispositif de commande (15, 15', 15a, 16, 16') peut être branché lors de l'abaissement de l'élément de support (3) sur les organes saillants fixes de centrage (13) et peut être débranché après soulèvment de l'élément de support venant dans la position alignée.

4. Dispositif suivant la revendication 1, caractérisé par le fait qu'un couple, associé à une surface portante (10), d'organes saillants de centrage (13) comporte en tant qu'organes de centrage, des surfaces sphériques (13'), dont les centres sont situés sur un axe (34) parallèle à cette surface portante (10), et que l'autre couple d'organes saillants de centrage (11) possède des évidements en forme de cônes circulaires ou de calottes, qui sont adaptés à la forme et à la position des sphères et dont les points correspondants sont également situés sur un axe parallèle à l'autre surface portante (3a).

5. Dispositif suivant la revendication 3 ou 4, caractérisé par le fait que l'élément de support (3) peut prendre appui, au niveau de ses bords non associés au châssis (8), par l'intermédiaire d'un organe saillant respectif de support (5), sur un organe saillant de support (6) prévu sur le dispositif de levage (2), auquel cas un organe saillant de support (5, 6) possède la forme d'une surface cylindrique (5') et l'autre possède la forme d'un évidement en forme de cône circulaire ou de calotte (6'), qui, lors de sa venue en appui sur la surface sphérique (5'), entoure cette dernière selon une liaison par formes complémentaires.

6. Dispositif suivant la revendication 3, 4 ou 5, caractérisé par le fait que les parties saillantes inférieures de support ou de centrage (6, 13) comportent la surface sphérique (5', 13').

7. Dispositif suivant la revendication 5, caractérisé par le fait que les organes saillants inférieurs de support ou de centrage (6, 13) sont réalisés sous la forme de bossages verticaux possédant une surface sphérique (5', 13').

8. Dispositif suivant l'une des revendications 3 à 7, caractérisé par le fait que l'angle d'ouverture de l'évidement en forme de cône circulaire ou de calotte (6', 12) est égal à environ 45°.

9. Dispositif suivant la revendication 3, caractérisé par le fait qu'il est prévu comme éléments de centrage, d'une part respectivement un prisme (29), possédant une arête découpée en forme de V et d'autre part un galet biconique respectif (30), dont l'axe s'étend transversalement par rapport au plan de la découpe en forme de V (31).

10. Dispositif suivant la revendication 3, caractérisé par le fait qu'il est prévu des deux côtés, comme éléments de centrage, des prismes (29, 30) comportant une arête découpée en forme de V, le plan de la découpe en forme de V (31, 33) situé d'un côté étant orienté perpendiculairement à celui prévu sur l'autre côté.

11. Dispositif suivant la revendication 3, caractérisé par le fait qu'il est prévu, comme élément de centrage d'une part un pivot (36) et d'autre part un évidement respectif (35) servant à recevoir le pivot (36) et formé par trois surfaces triangulaires et/ou trapézoïdales inclinées approximativement à la manière des surfaces intérieures d'un tétraèdre.

12. Dispositif suivant la revendication 3, caractérisé par le fait que l'organe de levage (14), qui soulève le bord de l'élément de support (3), situé à l'opposé des organes saillants de centrage (11), est réalisé sous la forme d'un moteur de levage pneumatique ou hydraulique, dont le cylindre est relié à l'élément de support (3) et dont le piston prend appui sur le dispositif de levage (2).

13. Dispositif suivant la revendication 3, caractérisé par le fait que l'organe de levage (14), qui soulève le bord de l'élément de support (3), situé à l'opposé des organes saillants de centrage, est réalisé sous la forme d'un moteur de levage pneumatique ou cylindrique, dont le cylindre est relié au dispositif de levage (2) et dont le piston est raccordé à l'élément de support (3).

14. Dispositif suivant la revendication 3, caractérisé par le fait que l'organe de levage (3) est réalisé sous la forme d'un dispositif d'entraînement à broche qui peut être actionné par un moteur, prend appui par l'une de ses extrémités sur le dispositif de levage et s'accroche par son autre extrémité à l'élément de support (3).

15. Dispositif suivant l'une des revendications 3 à 14, caractérisé par le fait que des deux côtés de l'élément de support (3) il est prévu des organes saillants de centrage (11) et respectivement un organe de levage (14).

16. Dispositif suivant la revendication 3, caractérisé par le fait que le dispositif de commande comporte au moins un interrupteur (15, 15a) servant à débrancher l'organe de levage (15), qui peut être actionné grâce à la coopération entre un organe de contact fixe (7) et un organe de contact relié à l'élément de support (3).

17. Dispositif suivant la revendication 16, caractérisé en ce que l'interrupteur (15) est prévu, conjointement avec un organe de contact, sur un organe saillant de centrage (11) de l'élément de support (3) et peut être actionné au moyen d'une cheville de contact (16) montée fixe sur le châssis (8), au voisinage de l'organe saillant de centrage (11).

18. Dispositif suivant la revendication 16 ou 17, caractérisé par le fait que l'interrupteur (15) est actionné, sur l'élément de support (3), par l'intermédiaire d'un levier de commutation (15') monté dans la zone située au-dessus d'un organe saillant de centrage (11) de l'élément de support (3), de manière à pouvoir pivoter autour d'un axe (18) et pouvant être déplacé vers l'interrupteur (15) au moyen de la cheville de contact fixe (16), à l'encontre de la force d'un ressort (19).

19. Dispositif suivant la revendication 16, caractérisé par le fait que l'interrupteur (15) est monté fixe sur le côté de l'élément de support (3), devant être soulevé par l'organe de levage (14), et peut être actionné au moyen d'un organe de contact réalisé sous la forme d'un organe saillant latéral (16') situé sur l'élément de support (3).

20. Dispositif suivant la revendication 3, caractérisé par le fait que le dispositif de commande possède un interrupteur à liquide (15a), qui travaille selon le principe du niveau à bulle d'air.

21. Dispositif suivant l'une des revendications 3 à 20, caractérisé par le fait que d'autres organes de levage ou d'appui (14', 14a) commandables, agissant sur la face inférieure de l'élément de support (3), sont prévus au niveau des angles ou des côtés de l'élément de support (3).

22. Dispositif suivant l'une des revendications 10 à 20, caractérisé par le fait que sur deux côtés opposés de l'élément de support (3) il est prévu des organes saillants d'appui (28), qui font saillie vers le haut à partir de la surface portante et forment un plan de support surélevé.

Fig.1

Fig.2

Fig.3

Fig. 4

Fig. 5

Fig. 6

11

Fig.7

Fig.9

Fig.10

Fig.8

Fig.12

Fig.11

EP 0 203 949 B1

Fig. 13

Fig. 14

Fig. 15

Fig. 16

Fig. 17

Fig. 18

Fig. 19

Fig. 20

Fig. 21

Fig.22

Fig.23

Fig.24

30

11

31

29

13

Fig. 25

30

34

29

11

3

13

Fig. 26

Fig. 27

Fig. 28

Fig. 29

Fig.30